# EUROPEAN PATENT APPLICATION

(11) **EP 4 421 004 A1**
(43) Date of publication of application: **28.08.2024**
(21) Application number: 22901071.5
(22) Date of filing: 14.11.2022
(51) Int. Cl.: B65G 43/02, G01B 21/20

(54) **SURFACE SHAPE MEASUREMENT METHOD, SURFACE SHAPE MEASUREMENT DEVICE, AND BELT MANAGEMENT METHOD**

(30) Priority: 02.12.2021 JP 2021196544
(71) Applicant: JFE Steel Corporation, Tokyo 100-0011 (JP)
(72) Inventor: YAMAHIRA Naoshi, Tokyo 100-0011 (JP); ENOEDA Seiji, Tokyo 100-0011 (JP); NISHINA Yoshiaki, Tokyo 100-0011 (JP)
(74) Representative: Hoffmann Eitle
(86) International application number: PCT/JP2022/042281
(87) International publication number: WO 2023/100638

(57) **Abstract**

Provided are a surface shape measurement method, a surface shape measurement device, and a belt management method by which a surface shape of a belt is measured with high accuracy. The surface shape measurement method to be executed by the surface shape measurement device configured to measure a surface shape of a belt driven in a direction of travel by a drive means, the surface shape measurement method including: a measurement process (S2) of measuring the surface shape of the belt when it is determined that a constant tension condition is satisfied, the constant tension condition being that tension applied to the belt can be regarded as constant; an acquisition process (S3) of acquiring measurement data for the belt; and an arithmetic process (S4) of computing the surface shape of the belt based on the acquired measurement data.

## Description

### TECHNICAL FIELD

The present disclosure relates to a surface shape measurement method, a surface shape measurement device, and a belt management method. The present disclosure relates, in particular, to a surface shape measurement method, a surface shape measurement device, and a belt management method by which unevenness of a belt driven by a drive means is measured.

### BACKGROUND

For example, belt conveyors with a conveyor belt wrapped around a pair of pulleys as a driving means are known as transport devices for transporting transported materials, such as raw materials. In the belt conveyors, the thickness of conveyor belts needs to be managed so as to prevent fractures of the conveyor belts.

Here, for example, Patent Literatures 1 and 2 describe a device and a system by which unevenness of a surface of a conveyor belt is measured by the light-section method using a line laser.

### CITATION LIST

### Patent Literatures

PTL 1: JP 2020-076767 A
PTL 2: JP 2017-032346 A

### SUMMARY

### (Technical Problem)

Here, tension applied to the conveyor belt changes due to the presence of transported items on the conveyor belt. The belt thickness changes due to expansion and contraction caused by changes in tension. However, the technology of Patent Literature (PTL) 1 does not consider the effect of such changes, thus making it difficult to accurately measure the thickness. Patent Literature (PTL) 2 describes the possibility of idling, but this is to detect scratches, not to control the thickness of the conveyor belt. Idling also decreases transport efficiency.

It would be helpful to provide a surface shape measurement method, a surface shape measurement device, and a belt management method by which a surface shape of a belt is measured with high accuracy.

### (Solution to Problem)

(1) A surface shape measurement method according to an embodiment of the present disclosure is
   a surface shape measurement method to be executed by a surface shape measurement device configured to measure a surface shape of a belt driven in a direction of travel by a drive means, the surface shape measurement method including:
   a measurement process of measuring the surface shape of the belt when it is determined that a constant tension condition is satisfied, the constant tension condition being that tension applied to the belt can be regarded as constant;
   an acquisition process of acquiring measurement data for the belt; and
   an arithmetic process of computing the surface shape of the belt based on the acquired measurement data.
(2) As an embodiment of the present disclosure, in (1),
   in the acquisition process, measurement data on an entire length in the direction of travel of the belt is acquired.
(3) As an embodiment of the present disclosure, in (1) or (2),
   the surface shape measurement method further includes a process, performed by the surface shape measurement device, of determining that the constant tension condition is satisfied when the tension is less than a predetermined value, based on a detection signal from a tension detection means configured to detect the tension of the belt.
(4) As an embodiment of the present disclosure, in any one of (1) to (3),
   the belt includes a conveyor belt configured to transport transported items, and
   the surface shape measurement method further includes a process, performed by the surface shape measurement device, of determining that the constant tension condition is satisfied when there is no transported item placed on the conveyor belt, based on conveyor belt operation information.
(5) As an embodiment of the present disclosure, in any one of (1) to (4),
   the surface shape measurement method further includes a process, performed by the surface shape measurement device, of measuring the surface shape of the belt, calculating an amount of misalignment from a normal position in a width direction of the belt based on the measurement data, and determining that the constant tension condition is satisfied when the calculated amount of misalignment is within a tolerance.
(6) A surface shape measurement method according to an embodiment of the present disclosure is
   a surface shape measurement method to be executed by a surface shape measurement device configured to measure a surface shape of a belt driven in a direction of travel by a drive means, wherein
   the belt is driven by the drive means to rotate around, the surface shape measurement method including:
      a process, performed by the surface shape measurement device, of measuring the surface shape of the belt during a plurality of rotations, and determining that a constant tension condition is satisfied for a section in which a difference in measurement data between the rotations is less than a predetermined threshold, the constant tension condition being that tension applied to the belt can be regarded as constant;
      a process of extracting the section and acquiring the measurement data for the belt; and
      an arithmetic process of computing the surface shape of the belt based on the acquired measurement data.
(7) As an embodiment of the present disclosure, in (6),
   in the process of acquiring the measurement data, measurement data on an entire length in the direction of travel of the belt is acquired.
(8) As an embodiment of the present disclosure, in any one of (1) to (7),
   the belt is wrapped around a pulley that is the drive means, and
   the surface shape of the belt is measured at an area in which the belt contacts the pulley.
(9) A surface shape measurement device according to an embodiment of the present disclosure is
   a surface shape measurement device configured to measure a surface shape of a belt driven in a direction of travel by a drive means, the surface shape measurement device including:
   a belt surface measurement unit configured to measure the surface shape of the belt when it is determined that a constant tension condition is satisfied, the constant tension condition being that tension applied to the belt can be regarded as constant; and
   an arithmetic unit configured to acquire measurement data for the belt and compute the surface shape of the belt based on the acquired measurement data.
(10) A belt management method according to an embodiment of the present disclosure includes
   managing a conveyor belt, based on a surface shape of the conveyor belt computed by the surface shape measurement method according to any one of (1) to (8).

### (Advantageous Effect)

According to the present disclosure, the surface shape measurement method, the surface shape measurement device, and the belt management method by which a surface shape of a belt is measured with high accuracy can be provided.

### BRIEF DESCRIPTION OF THE DRAWINGS

In the accompanying drawings:
FIG. 1 illustrates an example configuration of a surface shape measurement device according to an embodiment;
FIG. 2 illustrates how a surface shape of a conveyor belt is measured by a belt surface measurement unit;
FIG. 3 illustrates the effect of expansion and contraction of the conveyor belt on the surface shape;
FIG. 4 is a flowchart illustrating an example of a surface shape measurement method according to an embodiment;
FIG. 5 illustrates changes in surface shape data in a direction of transport due to rotations; and
FIG. 6 illustrates differences in surface shape data due to meandering.

### DETAILED DESCRIPTION

Hereinafter, a surface shape measurement device, a surface shape measurement method, and a belt management method according to an embodiment of the present disclosure will be described with reference to the drawings. In the figures, the same or corresponding portions are denoted with the same reference signs. In the description of the present embodiment, description of the same or corresponding portions will be omitted or simplified as appropriate.

### (Embodiment 1)

### <Surface Shape Measurement Device>

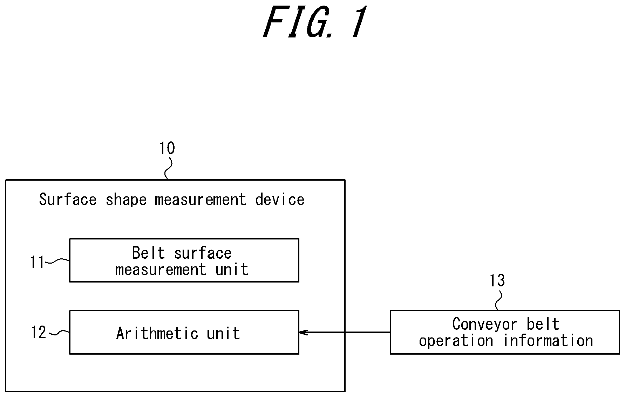

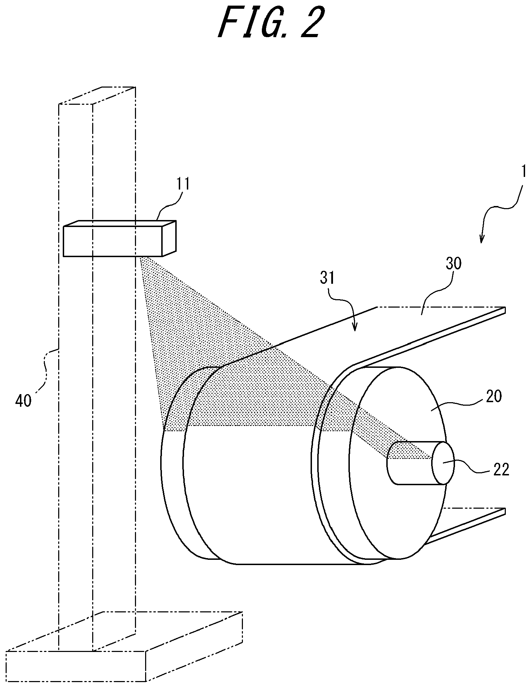

FIG. 1 illustrates an example configuration of a surface shape measurement device 10 according to the present embodiment. FIG. 2 illustrates how a surface shape of a conveyor belt 30 of a belt conveyor 1 is measured by a belt surface measurement unit 11 of the surface shape measurement device 10. The surface shape measurement device 10 measures the surface shape of the conveyor belt 30 wrapped around a pulley 20, as illustrated in FIG. 2. Here, the pulley 20 is an example of a drive means. The conveyor belt 30 is an example of a belt. The surface shape measurement device 10 is a device that measures the surface shape of the belt driven in a direction of travel by the drive means. Although the belt is not limited to the conveyor belt 30, it is described as the conveyor belt 30 driven by the pulley 20 in the present embodiment. Here, the direction of travel is a direction in which the belt moves by driving force from the drive means. In the present embodiment, the direction of travel is also referred to as a direction of transport. The direction of transport is a direction in which transported items placed on a surface 31 of the conveyor belt 30 in operation move.

In the belt conveyor 1, the thickness of the conveyor belt 30 needs to be managed so as to prevent fractures of the conveyor belt 30. The thickness of the conveyor belt 30 can be computed from the surface shape measured by the surface shape measurement device 10 and managed. When the surface shape can be measured with high accuracy, the thickness of the conveyor belt 30 can be accurately obtained by computation. Here, the surface shape refers to a shape of the surface 31 of the conveyor belt 30 including its unevenness. For example, an area on the surface 31 of the conveyor belt 30 that is depressed compared to its surroundings can indicate that this area of the conveyor belt 30 is thinner than the surroundings.

As illustrated in FIG. 1, the surface shape measurement device 10 according to the present embodiment includes the belt surface measurement unit 11 and an arithmetic unit 12. The surface shape measurement device 10 is a device that measures the surface shape of the conveyor belt 30, by the belt surface measurement unit 11 and the arithmetic unit 12 operating in cooperation. The arithmetic unit 12 acquires conveyor belt operation information 13 as needed. The conveyor belt operation information 13 is information regarding the operation and the state of the conveyor belt 30 that is obtained, for example, from a control unit of the belt conveyor 1. The belt surface measurement unit 11 and the arithmetic unit 12 may be connected by a network, such as a local area network (LAN), so as to be capable of transmitting and receiving information (measurement data) obtained by measurement. The control unit of the belt conveyor 1 may be connected by the same network, such as a LAN. Details of components of the surface shape measurement device 10 and specific examples of the conveyor belt operation information 13 will be described later.

As illustrated in FIG. 2, the conveyor belt 30, which is an object to be measured by the surface shape measurement device 10, is wrapped around a pair of pulleys 20. When the pulleys 20 rotate, the conveyor belt 30 moves and can transport transported items placed on the surface 31 of the conveyor belt 30. Here, the surface 31 of the conveyor belt 30 refers to a surface (outer surface) of the conveyor belt 30 that is opposite to a surface (inner surface) located closer to the pulleys 20.

### <Belt Surface Measurement Unit>

As illustrated in FIG. 2, the belt surface measurement unit 11 measures the surface shape of the conveyor belt 30. In the present embodiment, the belt surface measurement unit 11 is a non-contact measurement device that measures the surface shape of the conveyor belt 30 while being out of contact with the conveyor belt 30. The belt surface measurement unit 11 performs measurement when the pulleys 20 and the conveyor belt 30 are rotating. The belt surface measurement unit 11 can measure the surface shape of the conveyor belt 30 without requiring idling. That is, the belt surface measurement unit 11 can measure the conveyor belt 30 in operation that is ready to transport transported items.

In the present embodiment, the belt surface measurement unit 11 is a device using the laser light-section method, such as a light-sectioning profilometer. The belt surface measurement unit 11 can measure the surface shape of the conveyor belt 30 over the entire length in the width direction, by emitting a laser beam onto the conveyor belt 30. The belt surface measurement unit 11 is disposed at a position from which it can emit a laser beam onto the conveyor belt 30 from diagonally above a pulley 20, so that the surface shape of the conveyor belt 30 can be measured at an area in which the conveyor belt 30 contacts the pulley 20. The belt surface measurement unit 11 may be configured to be held in the vicinity of the pulley 20 by a holding member 40 installed on the ground. At this time, in order to accurately measure a thickness direction of the conveyor belt 30, the belt surface measurement unit 11 is installed so that a direction in which the laser beam is emitted passes through a center 22 of the pulley 20. The belt surface measurement unit 11 measures the surface shape of the conveyor belt 30 at an area in which it contacts the pulley 20, so that the conveyor belt 30 does not swing up and down and can be measured in a stable posture.

Thus, the belt surface measurement unit 11 can perform measurement and obtain information on the surface shape of the conveyor belt 30 including its unevenness. It is to be noted that the obtained information on the surface shape is information on the surface shape of the conveyor belt 30 including changes in the belt thickness in a case in which the belt thickness changes due to expansion and contraction caused by changes in tension. Therefore, in the present embodiment, the belt surface measurement unit 11 measures the surface shape of the conveyor belt 30 when it is determined that constant tension condition is satisfied. The constant tension condition is a condition that tension applied to the conveyor belt 30 can be regarded as constant.

Here, in another configuration example, a device that does not use the laser light-section method can be employed as the belt surface measurement unit 11. However, because the belt surface measurement unit 11 measures the surface shape of the conveyor belt 30 when the conveyor belt 30 is rotating, it is preferable to employ a non-contact measurement device that can make a measurement while being out of contact with the conveyor belt 30.

### <Arithmetic Unit>

The arithmetic unit 12 computes the surface shape of the conveyor belt 30, based on measurement data, which is information on the surface shape from the belt surface measurement unit 11, and conveyor belt operation information 13, which is acquired as needed. Computing the surface shape may include determining the unevenness of the surface 31 of the conveyor belt 30 by, for example, associating it with a two-dimensional map, or it may include determining the thickness of the conveyor belt 30. The arithmetic unit 12 may determine the thickness of the conveyor belt 30 by subtracting the distance from the belt surface measurement unit 11 to the pulley 20 that has been measured or computed in advance, in a case in which the measurement data is given in the distance from the belt surface measurement unit 11 to the conveyor belt 30.

The arithmetic unit 12 may be configured to include a processor that executes computation, and a memory that stores data (such as information on the surface shape) to be used in the computation. The arithmetic unit 12 may be, for example, a computer. The processor is, for example, a general-purpose processor or a dedicated processor that is dedicated to specific processing, but is not limited to these and can be any processor. The memory includes one or more memories. The memory can be, for example, semiconductor memory, magnetic memory, optical memory, or the like, but is not limited to these and can be any memory. The aforementioned distance from the belt surface measurement unit 11 to the pulley 20 may be stored in the memory.

The arithmetic unit 12 also determines whether the tension constant condition is satisfied. In the present embodiment, the arithmetic unit 12 determines that the constant tension condition is satisfied when there is no transported item placed on the conveyor belt 30, based on conveyor belt operation information 13. Furthermore, when determining that the constant tension condition is satisfied, the arithmetic unit 12 outputs a signal to cause the belt surface measurement unit 11 to measure the surface shape of the conveyor belt 30. Here, in another example, the belt surface measurement unit 11 may execute measurement regardless of the constant tension condition, and the arithmetic unit 12 may select measurement data obtained at a time when it is determined that the constant tension condition is satisfied and compute the surface shape of the conveyor belt 30 based on the selected measurement data.

It is possible to determine whether a transported item is placed on the conveyor belt 30, based on data and signals contained in the conveyor belt operation information 13. Here, the control unit of the belt conveyor 1 that generates the conveyor belt operation information 13 may include, for example, a hopper opening and closing unit and a tension detection means that detects tension of the belt. The hopper opening and closing unit is a unit for detecting the opening and closing of the hopper that feeds a raw material as a load onto the conveyor belt 30. When it is "open," a raw material (load) is fed onto the conveyor belt 30, and when it is "closed," the feeding of material onto the conveyor belt 30 is stopped. The tension detection means is a sensor or the like that detects the tension of the belt. For example, the belt conveyor 1 may include a device for controlling tension pulleys so as to maintain constant tension on the conveyor belt 30. The tension detection means may be a sensor that is included in the device for controlling the tension pulleys. In a specific example, the tension detection means may be a load sensor that measures a load applied to the conveyor belt 30. Here, the tension detection means may be configured to estimate tension from information, such as the load, or it may be configured to directly measure the tension applied to the conveyor belt 30.

In the present embodiment, the conveyor belt operation information 13 includes a signal from the hopper opening and closing unit and/or a detection signal from the tension detection means. When the conveyor belt 30 rotates by a predetermined amount after the hopper opening and closing unit is "closed", and the raw material has been transported, the arithmetic unit 12 determines that there is no transported item placed on the conveyor belt 30 and the constant tension condition is satisfied. Alternatively, the arithmetic unit 12 determines that the constant tension condition is satisfied when the tension applied to the conveyor belt 30 is less than a predetermined value, based on a detection signal from the tension detection means. The predetermined value may be determined based on, for example, a detection signal during idling that has been acquired in advance.

### <Surface Shape Measurement Method>

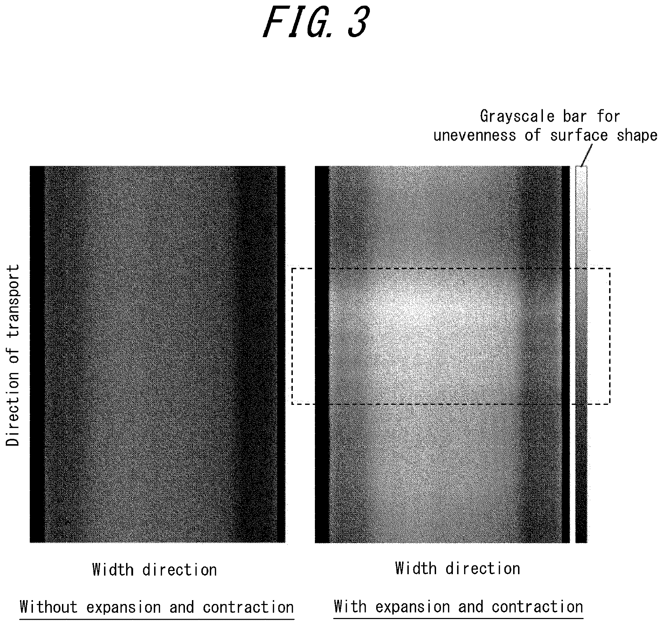

FIG. 3 illustrates the effect of expansion and contraction of the conveyor belt 30 on the surface shape. In the example of FIG. 3, the unevenness of surface shape data in measurement data is illustrated in grayscale. White areas are depressed areas. Black areas are protruded areas. In the figure on the left, the surface shape of the conveyor belt 30 with no expansion or contraction is measured. The figure on the right illustrates the surface shape of the conveyor belt 30 in which the tension is changed by, for example, placing a transported item on the conveyor belt 30 with no expansion or contraction. In the figure on the right, which illustrates the conveyor belt 30 with expansion or contraction, a wavy surface shape can be seen in the direction of transport, especially in the dashed line box. When the conveyor belt 30 expands or contracts in this manner, the thickness cannot be obtained accurately. According to a surface shape measurement method described below, the surface shape is measured at an appropriate time when the constant tension condition is satisfied, and therefore an accurate thickness can be obtained.

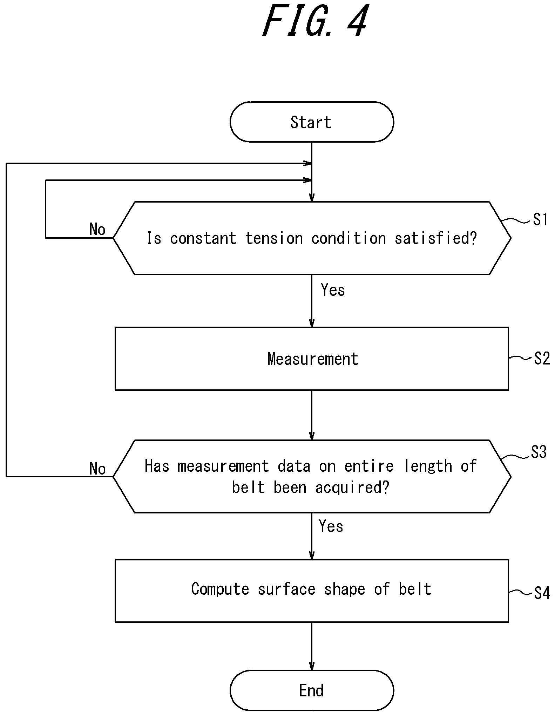

FIG. 4 is a flowchart illustrating an example of the surface shape measurement method to be executed by the surface shape measurement device 10 according to the present embodiment.

The surface shape measurement device 10 waits when there is a transported item being transported, based on conveyor belt operation information 13 (No in Step S1) . When determining that there is no transported item and the constant tension condition is satisfied (Yes in Step S 1), the surface shape measurement device 10 causes the belt surface measurement unit 11 to perform measurement (Step S2, measurement process).

The surface shape measurement device 10 acquires measurement data on the entire length in the direction of travel of the conveyor belt 30 (Step S3, acquisition process). Here, the arithmetic unit 12 of the surface shape measurement device 10 may acquire the distance from a reference position to a measurement position in the direction of travel of the conveyor belt 30 (distance in the direction of transport) based on the conveyor belt operation information 13 or the like, and store the measurement data in the memory by associating the measurement data with the distance in the direction of travel. The measurement position of the conveyor belt 30 can be obtained, for example, by an encoder or the like attached to the pulley 20. Information on the encoder or the like may be included in the conveyor belt operation information 13. Here, the measurement data for the conveyor belt 30 that is to be acquired does not necessarily need to be data on the "entire length" in the direction of travel. Furthermore, the "measurement data on the entire length" in the direction of travel of the conveyor belt 30 does not necessarily need to be data on actually measured every part. In other words, the measurement data on the entire length of the conveyor belt 30 in the direction of travel may consist of non-contiguous sets of measurement data including missing parts that have not been measured, as long as it contains sufficient actual measurement data for the arithmetic unit 12 to compute the surface shape. For example, even when part of the conveyor belt 30 in the direction travel is not actually measured, the arithmetic unit 12 can compute the surface shape by making an estimation using a known complementation method (linear completion in one example) based on actual measurement data before and after the part.

Here, because the conveyor belt 30 is driven by the pulleys 20, which are the drive means, to rotate around, the measurement data on the entire length in the direction of travel may be referred to below as measurement data corresponding to one rotation. When the measurement data corresponding to one rotation has not been acquired (No in Step S3), the surface shape measurement device 10 returns to the processing of Step S1 and continues measurement. When the measurement data corresponding to one rotation has been acquired (Yes in Step S3), the surface shape measurement device 10 causes the arithmetic unit 12 to compute the surface shape of the conveyor belt 30 (Step S4, arithmetic process).

### <Belt Management Method>

Using the above surface shape measurement method, the conveyor belt 30 can be managed (monitored), based on the computed surface shape of the conveyor belt 30. The surface shape measurement device 10 determines, for example, whether the thickness of the conveyor belt 30 is sufficient, based on the computed surface shape of the conveyor belt 30. When determining that the thickness is not sufficient, the surface shape measurement device 10 can inform an operator of a fault in the conveyor belt 30 or stop the conveyor belt 30. By thus managing the conveyor belt 30 based on the computed surface shape of the conveyor belt 30, it is possible to detect a fault in the conveyor belt 30 with high accuracy and to promptly address the fault.

As described above, with the above configuration and processes, the surface shape measurement device 10 and the surface shape measurement method according to the present embodiment can measure the surface shape of the conveyor belt 30 with high accuracy. Moreover, the belt management method according to the present embodiment makes it possible to accurately determine the thickness of the conveyor belt 30, so that the conveyor belt 30 can be managed so as to prevent fractures or the like.

### (Embodiment 2)

In the first embodiment, the arithmetic unit 12 acquires, from the conveyor belt operation information 13, information on whether a transported item is placed. For example, when the conveyor belt operation information 13 does not contain information regarding placement of a transported item, the arithmetic unit 12 may estimate a section of the conveyor belt 30 that is not affected by expansion or contraction, as in the present embodiment. To avoid redundant explanation, the following will explain the configuration and processes that differ from the first embodiment.

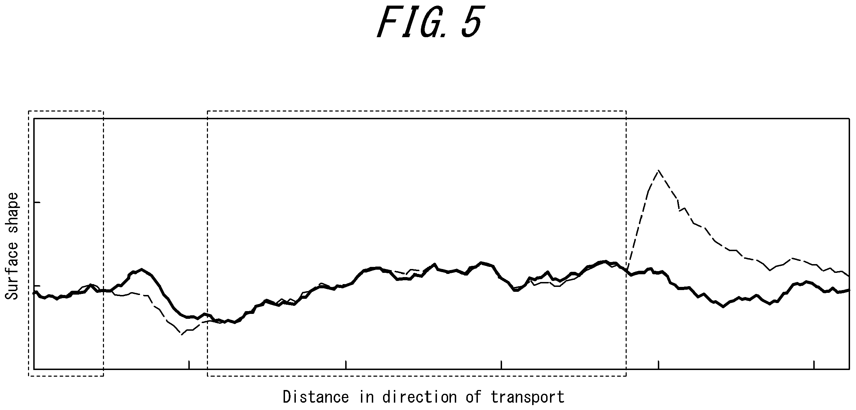

FIG. 5 illustrates changes in surface shape data in the direction of transport due to rotations. In the example of FIG. 5, surface shape data corresponding to two rotations of the conveyor belt 30 is plotted, with the distance in the direction of travel as the horizontal axis and the unevenness of the surface shape data as the vertical axis. Here, in the surface shape data, an average of values taken in the width direction of the conveyor belt 30 is used as a value of the surface shape at the measurement position. In the surface shape data corresponding to two rotations plotted in FIG. 5, the solid line represents the surface shape data corresponding to the first rotation, and the dashed line represents that corresponding to the second rotation.

In the example of FIG. 5, the surface shape data corresponding to one rotation and that corresponding to the other rotation substantially coincide in the area surrounded by the dashed line rectangle box, while they do not coincide in the area outside the dashed line box. When the conveyor belt 30 is not expanding or contracting, nearly identical surface shape data can be obtained for each rotation. In contrast, when there is expansion and contraction, the surface shape data differs from rotation to rotation. In the present embodiment, the belt surface measurement unit 11 acquires surface shape data during a plurality of rotations. The arithmetic unit 12 identifies a section with little change between rotations for the surface shape data, and estimates that the tension constant condition is satisfied for data in the identified section and uses it in computation. The arithmetic unit 12 may calculate the difference between rotations and identify a section in which the difference is smaller than a predetermined threshold. The predetermined threshold is a numerical value determined from operation conditions or the like of the belt conveyor 1, and it is approximately 0.5 mm in an example. The measurement is performed until it is estimated by the arithmetic unit 12 that the constant tension condition is satisfied for the entire length in the direction of travel of the conveyor belt 30. After performing the measurement in this manner, the arithmetic unit 12 combines the data for the identified section into data corresponding to one rotation.

In the present embodiment, the surface shape measurement device 10 executes the surface shape measurement method as follows. First, the belt, which is an object to be measured, such as the conveyor belt 30, is driven by a drive means to rotate around. The surface shape measurement device 10 measures the surface shape of the belt during a plurality of rotations and determines that the constant tension condition is satisfied for a section in which the difference in measured data between rotations is smaller than a predetermined threshold. The surface shape measurement device 10 extracts such sections, so as to acquire measurement data on the entire length in the direction of travel of the belt. The surface shape measurement device 10 then computes the surface shape of the belt based on the acquired measurement data.

As described above, the surface shape measurement device 10 and the surface shape measurement method according to the present embodiment can measure the surface shape of the conveyor belt 30 with high accuracy, even when information on whether a transported item is placed cannot be obtained from the conveyor belt operation information 13.

### (Embodiment 3)

In the first embodiment, the arithmetic unit 12 acquires, from the conveyor belt operation information 13, information on whether a transported item is placed. Here, the conveyor belt 30 may be subjected to force in the width direction by the transported item. For example, in a case in which the conveyor belt operation information 13 does not contain information regarding placement of a transported item, the arithmetic unit 12 may estimate whether the constant tension condition is satisfied based on tension imbalance in the width direction, as in the present embodiment. To avoid redundant explanation, the following will explain the configuration and processes that differ from the first embodiment.

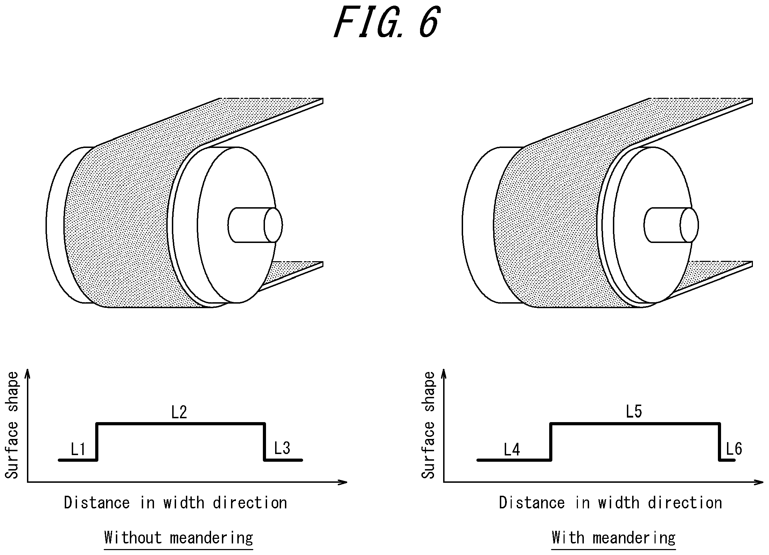

FIG. 6 illustrates differences in surface shape data due to meandering. Meandering is a phenomenon in which the conveyor belt 30 shifts from a center in the width direction of a pulley 20 to an edge due to tension imbalance in the width direction of the conveyor belt 30 caused by bias due to a transported item placed on the conveyor belt 30.

FIG. 6 illustrates the surface shape of the conveyor belt 30, including the pulley 20, in the width direction. L1, L3, L4, and L6 represent the surface shape of the exposed pulley 20. L2 and L5 represent the surface shape of the conveyor belt 30. As illustrated in the figure on the left, in the surface shape data in which there is no meandering, L 1 and L3 are measured as approximately the same length, and L2 is measured approximately in the center. In contrast, as illustrated in the figure on the right, in the surface shape data in which there is meandering, the lengths of L4 and L6 are measured differently, and L5 is measured with a bias from the center to either the left or the right.

In the present embodiment, the arithmetic unit 12 computes the amount of misalignment from the normal position in the width direction of the conveyor belt 30 from the difference between the length of the surface shape on the left and that on the right of the exposed pulley 20. The amount of misalignment is 1/2 of the absolute value of the difference between the length of the surface shape on the left and that on the right of the exposed pulley 20. In the example on the right in FIG. 6, the amount of misalignment is calculated as 1/2 of the absolute value of a value obtained by subtracting the length of L6 from the length of L4. When the amount of misalignment is within a tolerance, the arithmetic unit 12 estimates that expansion and contraction of the conveyor belt 30 is small because there is no meandering and the constant tension condition is satisfied. Here, the normal position is a position of the conveyor belt 30 when no meandering occurs, and it is also a target position in the design of the conveyor belt 30. Here, the tolerance is, for example, approximately 5% of the entire width of the belt. For example, in a case in which a belt with a width of 1600 mm is used, the tolerance is 80 mm.

In the present embodiment, the surface shape measurement device 10 executes the surface shape measurement method as follows. First, the surface shape measurement device 10 causes the belt surface measurement unit 11 to measure the surface shape of the conveyor belt 30, in order to determine the amount of misalignment. The arithmetic unit 12 calculates the amount of misalignment from the normal position in the width direction of the conveyor belt 30 based on measurement data, and determines that the constant tension condition is satisfied when the calculated amount of misalignment is within the tolerance. The surface shape measurement device 10 then executes a measurement process in which measurement is performed by the belt surface measurement unit 11, and executes an acquisition process and an arithmetic process in the same manner as in the first embodiment.

In another example of processing, the belt surface measurement unit 11 may execute measurement regardless of the constant tension condition, and the arithmetic unit 12 may select measurement data taken at a time when it is estimated that the constant tension condition is satisfied and compute the surface shape of the conveyor belt 30 based on the selected measurement data. At this time, the surface shape measurement device 10 performs measurement until measurement data in which the constant tension condition is satisfied has been collected for one rotation of the conveyor belt 30.

As described above, with the above configuration and processes, the surface shape measurement device 10 and the surface shape measurement method according to the present embodiment can measure the surface shape of the conveyor belt 30 with high accuracy, by determining whether there is meandering from measurement data. The surface shape measurement device 10 and the surface shape measurement method according to the present embodiment can measure the surface shape of the conveyor belt 30 with high accuracy, even when conveyor belt operation information 13 cannot be acquired, for example.

Although an embodiment of the present disclosure has been described based on the drawings and examples, it is to be noted that various modifications and changes may be easily made by those skilled in the art based on the present disclosure. Accordingly, such modifications and changes are included within the scope of the present disclosure. For example, functions or the like included in each component, each step (process), or the like can be rearranged without logical inconsistency, and a plurality of components, steps, or the like can be combined into one or divided. An embodiment according to the present disclosure can also be implemented as a program that is executed by a processor included in a device, or as a storage medium in which the program is recorded. It is to be understood that these are included within the scope of present disclosure.

The above embodiments can be applied in combination. For example, whether the constant tension condition is satisfied may be determined based on either "whether there is a transported item being transported" or the "amount of misalignment from the normal position of the conveyor belt 30."

Although in the above embodiments, an object to be measured is the conveyor belt 30 wrapped around the pulleys 20, it is not limited to the conveyor belt 30. The belt, which is an object to be measured, at least needs to be a belt driven by the drive means, and it may be a timing belt or the like that transmits power from gear to gear, for example.

In the above embodiments, the surface shape is measured by the belt surface measurement unit 11 attached to a certain position while the conveyor belt 30 is being rotated (driven). Here, the belt surface measurement unit 11 may be mounted on a drone or the like, and it may be configured to measure the surface shape of the conveyor belt 30 by moving the drone even when the conveyor belt 30 is stopped.

The above embodiments describe the configuration in which the surface shape is measured with as little tension as possible being applied to the conveyor belt 30, such as when no load is placed. Here, a configuration in which a predetermined tension is applied to the belt and the surface shape is measured under the predetermined tension may be used.

### REFERENCE SIGNS LIST

- 1: Belt conveyor
- 10: Surface shape measurement device
- 11: Belt surface measurement unit
- 12: Arithmetic unit
- 20: Pulley
- 22: Center
- 30: Conveyor belt
- 31: Surface of conveyor belt
- 40: Holding member

## Claims

1. A surface shape measurement method to be executed by a surface shape measurement device configured to measure a surface shape of a belt driven in a direction of travel by a drive means, the surface shape measurement method comprising:
a measurement process of measuring the surface shape of the belt when it is determined that a constant tension condition is satisfied, the constant tension condition being that tension applied to the belt can be regarded as constant;
an acquisition process of acquiring measurement data for the belt; and
an arithmetic process of computing the surface shape of the belt based on the acquired measurement data.

2. The surface shape measurement method according to claim 1, wherein, in the acquisition process, measurement data on an entire length in the direction of travel of the belt is acquired.

3. The surface shape measurement method according to claim 1 or 2, further comprising a process, performed by the surface shape measurement device, of determining that the constant tension condition is satisfied when the tension is less than a predetermined value, based on a detection signal from a tension detection means configured to detect the tension of the belt.

4. The surface shape measurement method according to any one of claims 1 to 3, wherein
the belt comprises a conveyor belt configured to transport transported items, and
the surface shape measurement method further comprises a process, performed by the surface shape measurement device, of determining that the constant tension condition is satisfied when there is no transported item placed on the conveyor belt, based on conveyor belt operation information.

5. The surface shape measurement method according to any one of claims 1 to 4, further comprising a process, performed by the surface shape measurement device, of measuring the surface shape of the belt, calculating an amount of misalignment from a normal position in a width direction of the belt based on the measurement data, and determining that the constant tension condition is satisfied when the calculated amount of misalignment is within a tolerance.

6. A surface shape measurement method to be executed by a surface shape measurement device configured to measure a surface shape of a belt driven in a direction of travel by a drive means, wherein the belt is driven by the drive means to rotate around, the surface shape measurement method comprising:
a process, performed by the surface shape measurement device, of measuring the surface shape of the belt during a plurality of rotations, and determining that a constant tension condition is satisfied for a section in which a difference in measurement data between the rotations is less than a predetermined threshold, the constant tension condition being that tension applied to the belt can be regarded as constant;
a process of extracting the section and acquiring the measurement data for the belt; and
an arithmetic process of computing the surface shape of the belt based on the acquired measurement data.

7. The surface shape measurement method according to claim 6, wherein, in the process of acquiring the measurement data, measurement data on an entire length in the direction of travel of the belt is acquired.

8. The surface shape measurement method according to any one of claims 1 to 7, wherein
the belt is wrapped around a pulley that is the drive means, and
the surface shape of the belt is measured at an area in which the belt contacts the pulley.

9. A surface shape measurement device configured to measure a surface shape of a belt driven in a direction of travel by a drive means, the surface shape measurement device comprising:
a belt surface measurement unit configured to measure the surface shape of the belt when it is determined that a constant tension condition is satisfied, the constant tension condition being that tension applied to the belt can be regarded as constant; and
an arithmetic unit configured to acquire measurement data for the belt and compute the surface shape of the belt based on the acquired measurement data.

10. A belt management method, comprising managing a belt, based on a surface shape of the belt computed by the surface shape measurement method according to any one of claims 1 to 8.
